# EUROPEAN PATENT APPLICATION

(11) **EP 0 839 561 A1**
(43) Date of publication of application: **06.05.1998**
(21) Application number: 97308594.7
(22) Date of filing: 28.10.1997
(51) Int. Cl.: B01D 19/00

(54) **Apparatus for removal of gas from a liquid stream**

(30) Priority: 29.10.1996 GB 9622478
(71) Applicant: Steptech Instrument Services Ltd, Stevenage, Herts SG1 2EW (GB)
(72) Inventor: Stephenson, Neil Stewart, Maxwell Road, Stevenage, Herts SG1 2EW (GB)
(74) Representative: Maury, Richard Philip

(57) **Abstract**

An apparatus for the removal of gas from a liquid stream comprising:-
(i) a liquid inlet (1) adapted to introduce a liquid stream into the apparatus;
(ii) a liquid reservoir (13), the reservoir in use being maintained at a negative pressure (12) relative to the pressure at the inlet;
(iii) a constant head device (8) adapted to maintain in use a substantially constant head of liquid in the said reservoir (13);
(iv) a fluid outlet (3) adapted to enable an off-take of liquid from the apparatus to a suitable measuring device (14);
(v) a connecting means connecting the fluid inlet, reservoir, constant head device and the fluid outlet;
such that, in use, liquid introduced into the inlet is degassed in the reservoir as a result of the applied negative pressure and the degassed liquid subsequently flows through a measuring device.

## Description

### Field of the Invention

The present invention relates to apparatus and methods for removing or reducing the amount of entrained gas from a liquid stream. It is particularly applicable, but in no way limited, to the removal of gas bubbles in a liquid stream presenting at optical measuring instruments. Additionally, the present invention may be used for the removal of gas from a pumped liquid stream where the gas may cause the pump to cavitate and, in the case of a centrifugal pump, lose prime. This invention allows centrifugal pumps to be used in applications where they would not previously have been specified.

### Background to the Invention

Optical measuring instruments for the measurement of liquid properties can be affected by the presence of gas bubbles. This is most noticeable where low measuring ranges are required. The bubbles may be inherent in the liquid as gas, they may be introduced through pumping action or may come out of solution as the pressure is released from the liquid. This typically occurs when the measurement takes place.

The traditional technique for the removal of entrained gases from samples is to reduce the liquid pressure and velocity. This allows gas to form bubbles, if entrained, and rise to the surface. These systems are normally vented to atmosphere. The principle of slowing the liquid down and reducing its pressure introduces other problems which can affect the performance of the measuring system. The reduction of velocity also allows solids to drop out or settle causing blockages in the transportation pipe work. Additionally the reduction of velocity allows the growth of bacteria - algae being the cause of many failures of instrumentation measurement both because of its opacity and through blocked pipes. The loss of velocity and increase in oxidation in the sample can cause oxides of metals to coat out on the pipe walls and measuring surfaces thus increasing the requirement for maintenance.

The removal of entrained gas from a pumped system is important when the stream is being pumped by a pump which is not self priming. This is a particular problem when the delivery pump is drawing from a sump. Gas entering the pump will cause it to loose its prime and stop pumping. This is known to be a problem on liquid delivery systems where the pump is drawing from a depth of a few metres. A pump adapted to draw liquid upward from beneath it inherently places the liquid under a negative pressure. The action of drawing the liquid into a negative pressure zone causes entrained gas to be released. This gas will enter and collect in the pump until it eventually looses prime and then stops pumping. Cold liquids inherently retain more gas and certain sample types will have dissolved gas in the liquid which when subjected to a reduction in pressure will be immediately released. A number of centrifugal pump designs attempt to overcome this problem but can only handle small volumes of gas within the liquid.

It is the object of the present invention to provide apparatus and method(s) which overcome or mitigate one or more of the above problems.

### Summary of the Invention

According to a first aspect of the present invention, in its broadest sense, there is provided an apparatus for the removal of gas from a liquid stream comprising:-
(i) A liquid inlet adapted to introduce a liquid stream into the apparatus;
(ii) A liquid reservoir, the reservoir in use being maintained at a negative pressure relative to the pressure at the inlet;
(iii) A constant head device adapted to maintain in use a substantially constant head of liquid in the said reservoir;
(iv) A fluid outlet adapted to enable an offtake of liquid from the assembly to a suitable measuring device;
(v) A connecting means connecting the fluid inlet, reservoir, constant head device and the fluid outlet;
such that, in use, liquid introduced into the inlet is degassed in the reservoir as a result of the applied negative pressure and the degassed liquid subsequently flows through a measuring device.

This enables fluid for analysis to be drawn off at a required rate, flow rates for a particular application generally being determined by varying the flow rates and pressures at strategic points within the apparatus.

Preferably the constant head device takes the form of a goose-bend arrangement. This arrangement is simple to construct and maintain.

Preferably the liquid inlet is adapted to introduce liquid against the general direction of flow of the liquid as it flows from the reservoir to the outlet. This particular arrangement improves the efficiency of the degassing process.

In an alternative embodiment the liquid can be introduced directly into the reservoir, preferably below the surface of the liquid level.

Preferably the outlet incorporates an inverted U-bend arrangement. This acts as one mechanism for controlling the flow of liquid into the measuring chamber.

Preferably the apparatus further incorporates a solids drain.

According to a second aspect of the present invention, in its broadest sense, there is provided an apparatus for the removal of gas from a liquid stream comprising a main feed pipe incorporating a cylindrical body of larger cross section than the pipe itself, said cylindrical body incorporating an inlet for liquid at a first end, a first outlet for liquid at a second end and a second outlet located at a position intermediate the first and second ends, the second outlet being maintained, in use, at a negative pressure with respect to the pressure within the body; whereby gas entrained in the liquid entering the body will tend to come out of solution and be drawn off through the second outlet.

The present invention also extends to cover methods of removing entrained gases using the apparatus herein described.

### Description of the Drawings

The invention will be further described, by way of example only, with reference to the accompanying drawings in which:-
Figure 1 shows in diagrammatic form a gas removal assembly according to a first aspect of the invention:-
Figure 2 shows an alternative goose-neck assembly;
Figure 3 shows an in-line gas removal assembly;
Figure 4 shows a typical application incorporating an in-line gas removal assembly as shown in Figure 3;
Figure 5 shows an application in which the in-line gas removal assembly is used without a pump.

### Description of the Preferred Embodiments

Aspects and embodiments of the present invention are now described by way of example only. These examples represent the best ways of putting the invention into practice that are currently known to the Applicant although they are not the only ways in which this could be achieved.

Two similar technical solutions are proposed. Their application is slightly different due to the nature of the gas problem. The one system removes gas from a liquid stream while also providing a constant head of pressure for the measuring system. It also only draws off the entrained gases. The second proposal is for gas removal from liquid streams but has further applications. It may be used in much larger flowing systems (typically flows in excess of 5 litres per minute) and provides sufficient gas removal to enable centrifugal pumps to operate where they would otherwise loose prime due to the presence of the gas.

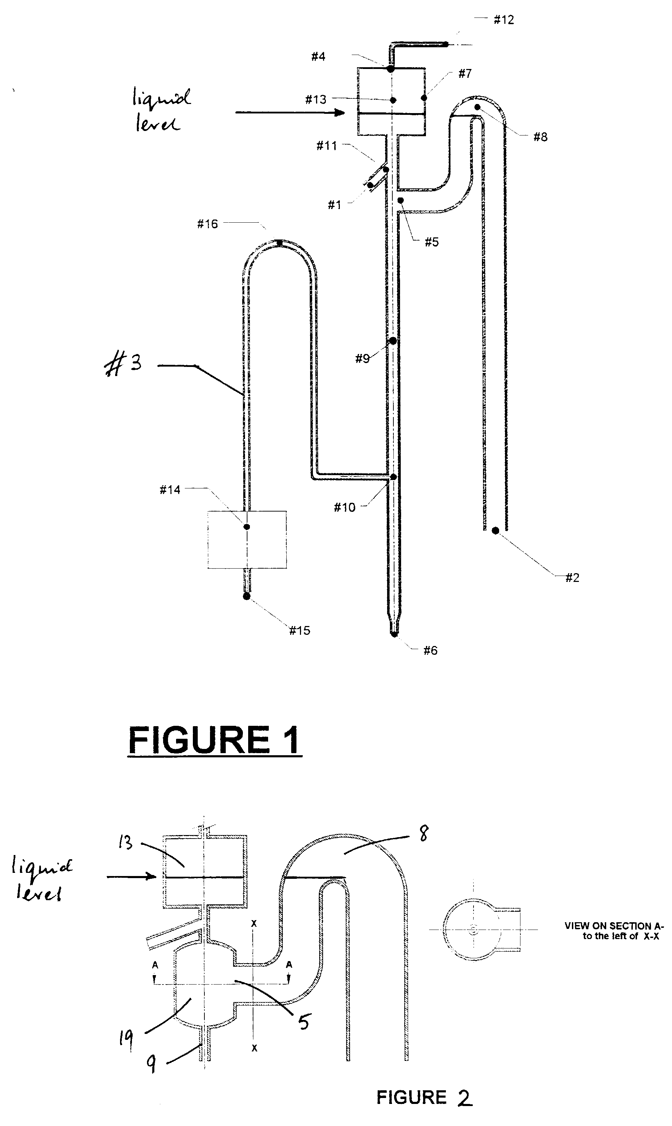

Referring to Figure 1, this illustrates a liquid inlet 1 whereby liquid is introduced into a gas removal apparatus under pressure. The liquid is normally under a positive pressure greater than or equal to 0.5 bar and flowing at a velocity of greater than 0.5m/s.

In this example, the liquid is introduced into a main pipe 9. This pipe forms a fluid connection between a reservoir 13, a constant head device 8, a liquid outlet 10 and, optionally, a solids drain 6.

The liquid sample is introduced into the apparatus at an acute angle to the main feed pipe 9. This angle is nominally 45° but is not critical. What is important is that the incoming liquid is introduced against the general flow of liquid down the main feed pipe towards the outlet.

The constant head device 8 is connected into the pipe 9 at position 5, below the reservoir 13. In this example, the constant head device takes the form of a goose-neck which is constructed such that the goose neck pipe is at least twice the diameter of the main feed pipe 9. In use, the drain from the goose-neck 2 is continuously flowing and vented to atmosphere. It is important that no back pressure is allowed to develop in the drain 2. The goose neck pipe diameter will alter according to the application flow rates. The larger pipe size the better and, in the case of very high flow rates, the constant head device can be constructed as shown in Figure 2.

The design of the apparatus is such that liquid will flow into pipe 9 and flood the system overflowing through the goose-neck 8. The flow rate must be sufficient to keep the goose-neck 8 flooded at all times. The water trap developed by the goose-neck 8 causes the enlarged section of pipe or reservoir 13 above the goose neck base to be partially filled with fluid as shown in Figure 1. A negative pressure relative to inlet point 11 of greater than 200 Pa is applied at port 4. Within limits, the greater the negative pressure, the more effective the removal of the entrained gas. Entrained gas will be removed from the liquid through the connection pipe 12. The liquid will rise into the enlarged pipe section 13 due to the negative pressure at 4. The size of the reservoir 13 is flow and pressure dependent. Higher flow rates will require a larger vessel to prevent 13 from over-filling. Reservoir 13 will generally be filled to a depth of approximately 20mm.

It will therefore be appreciated that liquid containing entrained gas bubbles or dissolved gas is forced into the apparatus under pressure and urged in the direction of reservoir 13 by both the direction in which the liquid is introduced and by the negative pressure applied to the reservoir. Entrained or dissolved gas is then removed and the liquid descends the main pipe 9 either to exit via drain 2 through the goose-neck bend or, in the case of a minor portion of the liquid, to proceed down the pipe 9 to outlet 10. From there, the gas-free liquid will flow around and up to point 3 where it will enter the measuring chamber 14. The exit 15 from the measuring chamber may direct the fluid to a suitable drain without any back pressure. The height of the loop 16 relative to the height of the goose-neck bend 8 is important and sets up, in combination with the input flow rate and various pipe diameters, the flow rate into the measuring chamber 14.

Turning now to the detail of the various components. The reservoir 13 is shown in Figure 1 as a form of tank. However, it could equally well be in the form of an enlarged diameter section of pipe. The reservoir size and shape is not critical provided it creates a surface exposed to negative pressure from which entrained gas, be it dissolved or in the form of bubbles, can be removed and drawn off through outlet 12.

The inlet 1 in this example is shown entering the main pipe 9 close to the reservoir and directing liquid towards that reservoir. It is also possible to introduce the liquid directly into the reservoir 13. Since frothing is to be avoided, liquid should preferably be introduced below the surface of the liquid level in the reservoir rather than above it. In order to minimise disturbance, this can be done by having a series of inlets (not shown) along one side or around the reservoir circumference such that liquid flows in almost as water flows over a weir. This invention is intended to encompass any liquid input arrangement which permits substantially steady state conditions in the reservoir consistent with a liquid surface exposed to negative pressure.

The exact position of extract port 4 is also not critical, as long as it is above the liquid level surface. A plurality of extract ports can be provided in case one gets blocked.

The goose-neck arrangement shown in Figure 1 is just one example of a constant head device. A variation on this theme which is particularly applicable to high flow rate applications is shown in Figure 2. In this case the diameter of pipe 9 is increased in the region 5 of the goose-neck take-off.

It will be appreciated from Figure 2 that the majority of liquid exits the system through the goose-neck. Only a minor portion, free from gas bubbles, proceeds down pipe 9 and into the measuring chamber 14.

Although pipe 9 is shown running substantially vertically, this need not be the case. Obviously, the reservoir 13 and constant head device 8 must be above the take off point 10, but not necessarily vertically above it. The invention covers any pipework set up which results in the desired effects. This is also true of the pipework cross-section. Circular cross-sections are illustrated but any suitable pipework will suffice. It should be borne in mind that the apparatus will need cleaning from time to time to remove algal growth and this is generally easier with circular pipes.

Various design perameters can be used to select the most appropriate flow rates at any particular point in the apparatus. These parameters include inlet flow rate and pressure, pipe diameter especially the diameter of the pipe run through the constant head device, outlet pipe diameter and the height of loop 16. Workshop experimentation will be required to obtain optimum flow rates through the measuring chamber 14 for each particular application.

The solids drain 6 would normally be flowing continuously and would be typically 0.5 x the diameter or less than that of the main pipe 9. The drain is also vented to atmosphere. The solids drain is designed to allow solids to be removed from the system and not build up over time. This is an optional requirement and where solids present no particular problem the invention will work without it.

In a further embodiment a liquid level detector 7 can be provided in the reservoir. This would be used to either stop the flow into the or open a valve to release the liquid rapidly from reservoir 13 in the case of the goose-neck bend 8 or outlet 2 becoming blocked.

The liquid emptying from outlets 2, 6 and 15 can be combined as required and returned to the post-measurement liquid stream without significant loss.

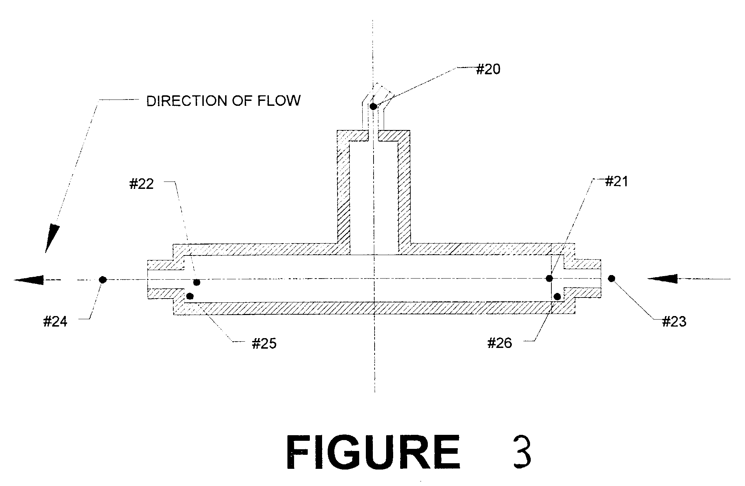

A second aspect of the present invention is illustrated in Figure 3. This shows a sectional part of a main feed pipe with a body portion of increased diameter. Liquid flows into the pipe at inlet 23. This can be at a positive or negative pressure. The pipe diameter is increased for a section of its length shown as 25 - 26. This increase in diameter is typically be minimally 1.1 diameters of the main feed pipe 24. The length 25 - 26 is a minimum of twice the internal diameter of the main feed pipe 24. The increase in pipe diameter marginally reduces the velocity over this pipe section. The body 23 has an exit orifice 27 intermediate between the inlet 23 and outlet 24 which is under a negative pressure relative to the pipe pressure. This causes a flow of liquid out of the outlet 20. Entrained gas entering this region of pipe will come out of solution and then exit at 20 as a result of the negative pressure relative to the pipe pressure.

The dimensions of the various pipes, inlets, outlets and the main body will depend upon the requirements of each particular application. Typically, the internal diameter of the exit port 20 should be between 2mm and 6mm. This is however dependent upon the initial liquid pressure at inlet 23, the available liquid volume and the available negative pressure applied at outlet 20. The negative pressure at 20 should be at least 200 Pa below the pressure at inlet 23. The greater this negative pressure the more effective is the removal of entrained gas.

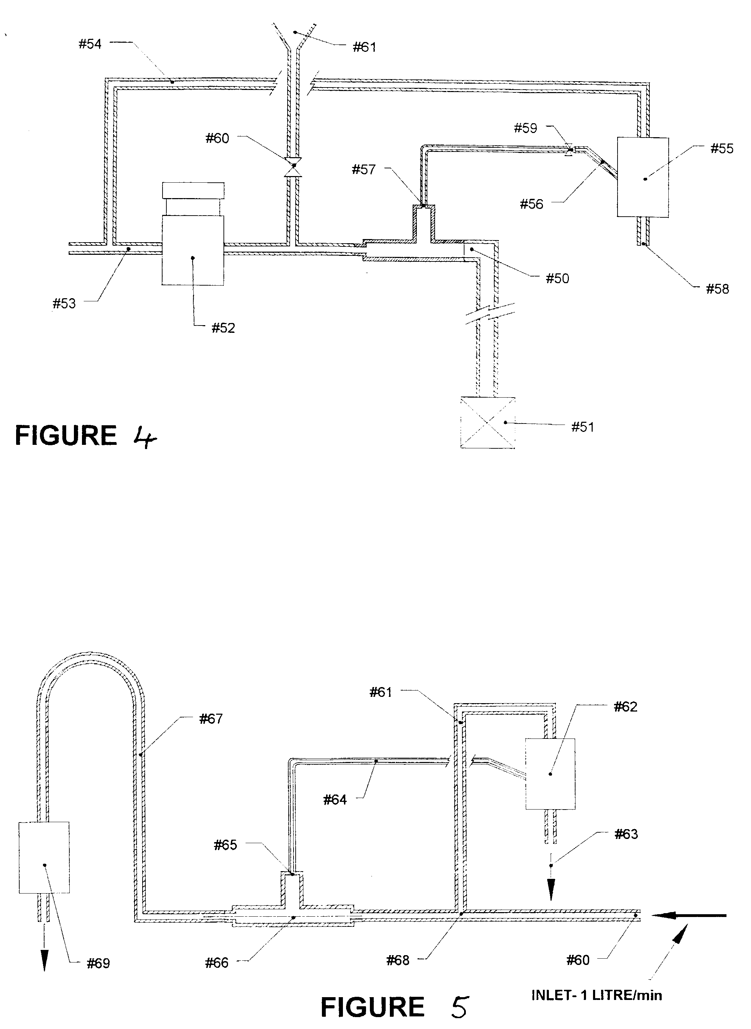

Turning again to the various components, inlet 23 and outlet 24 would typically be formed by a feedpipe. The inlet and outlet can be of the same or different cross section and figures 4 and 5 give examples of both possibilities. What is important is that the gas-containing liquid flows into a region or body where it is subjected to negative pressure, the negative pressure acting to draw off both liquid and gas. Advantageously, the cross-sectional area of the region where negative pressure is applied is larger than that on either side such that the flow rate is reduced in the region where it experiences negative pressure. Gas free liquid then proceeds through outlet 24 to either a measuring chamber or to a pump.

Figure 4 shows an application of the invention for the removal of gas from the inlet to a pump 52. The liquid sample enters the gas removal apparatus at 50. In this case the sample is drawn up from a sump via a non-return foot valve 51. The pump 52 produces a flow of fluid under pressure and part of this flow is directed to a venturi 55. The negative pressure developed by the venturi is applied to the pump inlet pipe at point 57. Gas and liquid flow from 57 to 56 as a result of the negative pressure. A non-return valve 59 prevents air entering the pump 52 at start-up when there is insufficient pressure and flow developed by the pump to operate the venturi. The non-return valve may be substituted by a manual valve which is simply shut during start up.

The funnel arrangement shown at 61 may be used to prime the pump for start up. The valve 60 is used to allow the priming liquid to be poured into the pump. This may be automated if desired by providing a liquid reservoir or liquid feed line 59 (not shown). Pneumatically or electronically controlling the valve 60 during the start up sequence of the pump will provide automatic start up.

The venturi 55 is vented to atmosphere through an open drain without back pressure. The negative pressure connection between points 57 and 56 is chosen such that the volume of gas and liquid drawn into the venturi 55 does not significantly deplete the total volume drawn by the pump.

Referring to Figure 6, this shows a gas removal apparatus similar to that shown in Figure 3 being used to provide a gas-free falling liquid stream to a measuring chamber. Liquid flow enters the apparatus at inlet 60 under pressure. A splitter 68 directs part of the flow to a venturi 62 and part to the enlarged section 66. The venturi creates a negative pressure which is applied at take off 65 where gas and liquid are drawn off. The gas free liquid sample then passes out of section 66 to a falling stream 69 via loop 67. As before, the optimum pipe diameters, pressures, flow rates etc will need to be determined by experimentation. However, this arrangement tends to be self-compensating for the flow to measuring chamber 69. A reduction in pressure of the feed at inlet 60 reduces the effectiveness of the venturi thus drawing less liquid from the portion 66. This in turn allows a greater proportion of the liquid to flow into loop 67 as less is drawn off from the outlet 65. Over the design operating range and pressures the flow into the measuring chamber is therefore held relatively constant.

This arrangement can be used when there is no need for a pump, for example when the liquid supply pressure is sufficient from its source. It is also particularly applicable where the sample volumes are small. In this particular aspect, a typical flow rate is in the region of 1 litre per minute. The total system volume is also in the region of 1 litre although greater volumes are possible.

In some applications, the two techniques can be employed together. This will occur where a pump is required to deliver the sample and a gas removal system is required in order for the pump to operate satisfactorily. A separate and second gas removal system can then be installed after the pump on the positive pressure side of the pump. In these applications, it is preferable if a pump of sufficient capacity to power two venturi systems is used.

To summarise, this particular invention can be applied in many applications. Pump size is not a limiting factor and it is not necessarily related to measurement technology. The invention relies upon there being a negative pressure available to draw the gas out of the stream. This is easily achieved in pumped systems with the use of a venturi. A side stream of the liquid is applied to a venturi. The stream jetting through the venturi will produce a negative pressure. This negative pressure is then used to remove the gas bubbles from the same stream. It is not essential that the negative pressure is generated by the venturi. If another source of negative pressure is available then this may be used to the same effect. The invention can though be self supporting by using the stream's own pressure to develop the required negative pressure.

This rapid in-line gas removal system may be used for in-line measuring systems under pressure and at high flow rates. Liquid streams are normally slowed down in order that the stream is stable without turbulence in the measuring zone. High sample velocities cause turbulence releasing gas bubbles into the stream. These bubbles will cause errors in optical measuring techniques such as turbidity and absorbence measurements.

Both applications can make use of the stream's inherent pressure to develop a negative pressure using the venturi technique. The negative pressure forces the liquid to release its retained gas in the form of bubbles.

## Claims

1. An apparatus for the removal of gas from a liquid stream comprising:-
(i) a liquid inlet adapted to introduce a liquid stream into the apparatus;
(ii) a liquid reservoir, the reservoir in use being maintained at a negative pressure relative to the pressure at the inlet;
(iii) a constant head device adapted to maintain in use a substantially constant head of liquid in the said reservoir;
(iv) a fluid outlet adapted to enable an off-take of liquid from the assembly to a suitable measuring device;
(v) a connecting means connecting the fluid inlet, reservoir, constant head device and the fluid outlet;
such that, in use, liquid introduced into the inlet is degassed in the reservoir as a result of the applied negative pressure and the degassed liquid subsequently flows through a measuring device.

2. An apparatus as claimed in Claim 1 wherein the constant head device takes the form of a goose-bend arrangement.

3. An assembly as claimed in Claim 1 or Claim 2 wherein the liquid inlet is adapted to introduce liquid against the general direction of flow as it flows from the reservoir to the outlet.

4. An assembly as claimed in Claim 1 or Claim 2 wherein the liquid inlet is adapted to introduce liquid directly into the reservoir.

5. An assembly as claimed in Claim 4 wherein the liquid is introduced below the level of the liquid surface in the said reservoir.

6. An assembly as claimed in any preceding claim wherein the outlet incorporates an inverted U-bend arrangement.

7. An assembly as claimed in any preceding Claim which further incorporates a solids drain.

8. An assembly according to any preceding Claim in which there is further provided a main feed pipe incorporating a cylindrical body of larger cross-section than the pipe itself, said cylindrical body incorporating an inlet for liquid at a first end, a first outlet for fluid at a second end, and a second outlet located at a position intermediate the first and second ends, the second outlet being maintained, in use, at a negative pressure with respect to the pressure within the body; whereby gas entrained in the liquid entering the body will tend to come out of solution and be drawn off through the second outlet.

9. An apparatus for the removal of gas from a liquid stream comprising a main feed pipe incorporating a cylindrical body of larger cross-section than the pipe itself, said cylindrical body incorporating an inlet for liquid at a first end, a first outlet for liquid at a second end and a second outlet located at a position intermediate the first and second ends, the second outlet being maintained, in use, at a negative pressure with respect to the pressure within the body; whereby gas entrained in the liquid entering the body will tend to come out of solution and be drawn off through the second outlet.
